# FASCICULE DE BREVET EUROPEEN

(11) **EP 2 523 261 B1**
(45) Date de publication et mention de la délivrance du brevet: **25.02.2015**
(21) Numéro de dépôt: 12167241.4
(22) Date de dépôt: 09.05.2012
(51) Int. Cl.: H01R 13/453, H01R 13/52, G02B 6/38, H01R 13/508

(54) **Ensemble de connexion étanche**
Dichte Verbindungseinheit
Sealed connection assembly

(30) Priorité: 10.05.2011 FR 1154033
(43) Date de publication de la demande: 14.11.2012
(73) Titulaire: SOURIAU, 78000 Versailles (FR)
(72) Inventeur: Affre De Saint Rome, Ronan, 29660 CARANTEC (FR); Philippe, Alain, 72560 CHANGÉ (FR)
(74) Mandataire: Deschamps, Samuel

(56) Documents cités:
- EP-A1- 2 146 232
- EP-A1- 2 148 396
- DE-A1- 4 422 134
- US-A- 4 176 897
- US-A- 5 716 224
- US-A1- 2002 115 319

## Description

### Domaine de l'invention

L'invention concerne un ensemble connecteur étanche muni de clapets assurant une étanchéité à la poussière et à l'humidité lorsque les connecteurs sont désaccouplés. Ces clapets sont destinés à obturer la fiche et l'embase de l'ensemble connecteur lorsque celles-ci sont désaccouplées et à se loger à l'intérieur de la fiche et de l'embase lorsque ces dernières sont accouplées.
L'invention trouve des applications dans le domaine de la connectique et, en particulier, dans le domaine de la connectique en milieu sévère comme la connectique pour l'équipement militaire ou aéronautique, et dans le domaine de la connectique optique où la protection contre la poussière et l'humidité est particulièrement critique.

### Etat de la technique

Dans le domaine de la connectique, un ensemble connecteur comporte généralement un connecteur mâle, appelé fiche, et un connecteur femelle, appelé embase, contenant chacun des contacts électriques ou optiques et destinés à s'accoupler l'un à l'autre pour assurer une conduction électrique ou optique entre les contacts de la fiche et ceux de l'embase.

En milieu sévère, c'est-à-dire en milieu soumis à des poussières, de la pluie, des embruns, etc., les ensembles connecteurs doivent être étanches. Pour cela, chaque ensemble connecteur est généralement muni de moyens d'étanchéité destinés à protéger les contacts.

Actuellement, les moyens d'étanchéité se présentent sous la forme d'une paire de bouchons d'obturation placés l'un devant la face avant de la fiche et l'autre devant la face avant de l'embase. Ils sont généralement vissés ou clipsés sur le corps de la fiche ou de l'embase. Ces deux bouchons sont retirés de la fiche et de l'embase juste avant de procéder à l'accouplement de ladite fiche avec ladite embase. Pour que ces bouchons ne soient pas perdus et qu'ils puissent être réutilisés lors du désaccouplement de la fiche et de l'embase, ils sont généralement reliés aux connecteurs par une chainette ou un câble.

Cette paire de bouchons présente l'inconvénient de devoir être retirée avant de procéder à l'accouplement de l'ensemble connecteur. Par conséquent, pendant la phase d'accouplement, des poussières et de l'humidité peuvent s'insérer à l'intérieur de la fiche et/ou de l'embase, polluant les contacts. En outre, ces bouchons présentent un encombrement évident aussi bien après l'accouplement, puisqu'ils sont attachés aux connecteurs, qu'avant l'accouplement, puisqu'ils nécessitent un certain espace pour pouvoir être retirés.

Il existe d'autres moyens d'étanchéité connus qui se présentent sous la forme de couvercles basculants. Un couvercle basculant est fixé devant la face avant de la fiche et un autre devant la face avant de l'embase. Chaque couvercle est fixé au moyen d'un ressort de rappel qui maintient le couvercle en position fermée. Lors de l'accouplement de la fiche et de l'embase, l'utilisateur doit faire basculer chacun des couvercles avant d'accoupler les connecteurs.

De tels moyens d'étanchéité présentent l'inconvénient d'être difficiles à manier pour l'utilisateur et de nécessiter un espace de travail non négligeable pour permettre à l'utilisateur de faire basculer les couvercles et de les maintenir basculés pendant qu'il accouple les connecteurs. En outre, comme pour les bouchons d'obturation, ils doivent être escamotés avant de procéder à l'accouplement, ce qui entraine des problèmes de pollution des contacts.

Ces moyens d'étanchéité sous forme de bouchons ou de couvercles présentent également l'inconvénient de nécessiter un nettoyage du connecteur, avant d'être refermés, pour que des poussières ou autre pollution ne soient pas amenées dans ledit connecteur. Une telle opération de nettoyage est indispensable dans le cas de connecteurs optiques.

Par ailleurs, ces moyens d'étanchéité sont montés en extérieur des connecteurs et peuvent donc être endommagés ou gêner des éléments extérieurs. Par exemple, les bouchons d'obturation et les couvercles basculants peuvent être arrachés ou endommagés par des chocs ou des frottements. Ils peuvent aussi bloquer le passage, dans une poulie ou dans une goulotte, du câble sur lequel est monté le connecteur. Dans le cas d'un câble tracté, ils peuvent aussi causer de la trainée dans l'eau.

D'autres moyens d'étanchéité sont également connus dans le domaine de la connectique. Ces moyens d'étanchéité se présentent sous la forme de lèvres déformables qui s'ouvrent pour laisser passer les contacts électriques. Ce type de moyens d'étanchéité est généralement utilisé pour des connecteurs destinés à être accouplés sous l'eau. Pour cela, les lèvres sont généralement constituées d'un épais joint déformable qui est étanche lorsqu'il est pincé radialement et qui ne libère qu'un faible diamètre pour laisser passer les contacts lors de l'accouplement.

Ces moyens d'étanchéité ont l'inconvénient de présenter un rapport surface disponible pour les contacts / surface d'encombrement en section relativement faible.

Solution existante la plus proche de l'invention : II existe une solution basée sur l'utilisation d'un clapet sur l'embase et un clapet sur la fiche comme présentés dans le document EP2146232. Lorsque la fiche pénètre dans l'embase son clapet bascule vers l'intérieur grâce à une pièce mobile appartenant à la fiche et qui recule à l'intérieur de celle-ci. Le clapet de l'embase s'ouvre vers l'intérieur de l'embase poussé par la partie centrale de la fiche portant les contacts. Les deux clapets basculent donc dans des directions opposées. Ce système présente deux inconvénients :
- La face souillée du clapet de l'embase se trouve dans la même zone que les contacts après raccord induisant une dissémination des poussières à l'intérieur du connecteur accouplé. Ce phénomène est aggravé par le fait que le clapet de l'embase est raclé par le corps de la fiche pendant l'accouplement.
- Ce système s'intègre mal dans un connecteur rond car les axes des clapets sont situés sur la périphérie desdits clapets. Suivant un tel système, un clapet plat qui couvrirait toute la face avant du corps d'un connecteur circulaire ne pourrait pas pivoter des 90° nécessaires pour libérer l'entrée du connecteur. Pour permettre cette rotation, le clapet ne couvre qu'une partie de la face avant du disque. L'ouverture libérée par le clapet pour laisser passer les contacts est donc réduite pour un encombrement donné.

### Brève description des dessins

La figure 1 représente une vue latérale en coupe d'une fiche et d'une embase d'un ensemble connecteur selon l'invention.
La figure 2 représente le système d'axe de rotation de l'ensemble connecteur de l'invention.
Les figures 3A à 3E représentent les différentes étapes de l'accouplement de la fiche et de l'embase de la figure 1.
La figure 4 représente une vue de la face avant d'un clapet selon un premier mode de réalisation de l'invention.
La figure 5 représente une vue en perspective de la fiche et de l'embase de l'ensemble connecteur de la figure 1.
Les figures 6A, 6B et 6C représentent une vue en coupe schématique de clapets selon un second mode de réalisation de l'invention.

### Exposé de l'invention

L'invention a justement pour but de remédier aux inconvénients des techniques exposées précédemment. A cette fin, l'invention propose un ensemble connecteur dont l'étanchéité est obtenue au moyen de clapets fermant la face avant des connecteurs et pouvant pivoter et se loger à l'intérieur des connecteurs lors de l'accouplement. Cet ensemble connecteur présente l'avantage de ne comporter aucun élément extérieur à l'ensemble connecteur ce qui permet de minimiser son encombrement extérieur. Il présente, en outre, l'avantage de permettre l'accouplement des connecteurs sans retrait préalable du moyen d'étanchéité.

En particulier, cet ensemble connecteur présente l'avantage d'optimiser la place disponible pour les contacts et il permet de confiner la face sale de chaque clapet entre les deux clapets, évitant ainsi la dispersion de poussières à l'intérieur du connecteur, cette caractéristique étant particulièrement avantageuse pour un connecteur optique.

De façon plus précise, l'invention concerne un ensemble connecteur comportant :
- une fiche comprenant un corps, un insert et des contacts logés longitudinalement dans l'insert,
- une embase comprenant un corps, une entretoise, un insert et des contacts logés longitudinalement dans l'insert, - le corps de la fiche étant apte à être inséré dans le corps de l'embase lors d'un accouplement assurant une connexion des contacts de la fiche avec les contacts de l'embase, - la fiche comporte une face avant fermée par un premier clapet positionné radialement sur la fiche, - l'embase comporte une face avant fermée par un second clapet positionné radialement sur l'embase.

Cet ensemble connecteur se caractérise par le fait que le premier et le second clapet étant aptes à pivoter simultanément et à se loger à l'intérieur de la fiche et de l'embase lors de l'accouplement de ladite fiche et de ladite embase.

Cet ensemble connecteur présente un encombrement limité, réduit au strict minimum car il ne comporte aucun élément extérieur aux connecteurs.

De plus, il présente l'avantage de n'entrainer aucun risque de pollution des contacts puisque les clapets pivotent au fur et à mesure de l'accouplement des deux connecteurs.

L'ensemble connecteur de l'invention peut comporter une ou plusieurs des caractéristiques suivantes :- le premier et le second clapet sont aptes à pivoter autour d'un même axe de pivotement pendant l'accouplement des connecteurs. - le premier clapet comporte une première saillie et le second clapet comporte une seconde saillie formant, avec la première saillie, l'axe de pivotement. - le corps de la fiche comporte une première saignée et l'entretoise de l'embase comporte une seconde saignée, la première et la seconde saignées formant une cavité apte à recevoir et à guider les saillies (16, 26). - chaque saillie a une extrémité en forme de C et chaque saignée a une section adaptée à la forme des extrémités desdites saillies. - l'insert de la fiche a une face avant ayant une forme sensiblement en L, l'insert de l'embase a une face avant ayant une forme sensiblement en L inversé, l'insert de la fiche et l'insert de l'embase ayant des formes complémentaires l'un de l'autre.
- l'insert de la fiche et l'insert de l'embase comportent chacun un logement apte à recevoir au moins partiellement le premier et le second clapets après que ceux-ci aient pivoté.
- le logement est réalisé par évidement d'une partie de la face avant de l'insert.
- la fiche et l'embase comportent chacune au moins un moyen de rappel assurant le retour du clapet en position radiale lorsque la fiche et l'embase sont désaccouplées.
- chaque clapet comporte, sur sa périphérie, un joint d'étanchéité assurant, d'une part, l'étanchéité avec la fiche ou l'embase et, d'autre part, l'isolement de la pollution située sur la surface extérieure des clapets lors du basculement desdits clapets à l'intérieur du connecteur.
- l'ensemble connecteur comporte un joint d'étanchéité torique placé entre l'entretoise et le corps de l'embase afin d'assurer une étanchéité de l'embase seule puis du connecteur complet après accouplement.
- la fiche et l'embase ont une forme globalement rectangulaire et le premier et le second clapets, respectivement de la fiche et de l'embase, comportent chacun deux battants aptes à pivoter par paire autour de deux axes de pivotement positionnés latéralement de part et d'autre desdits battants.

### Description détaillée de modes de réalisation de l'invention

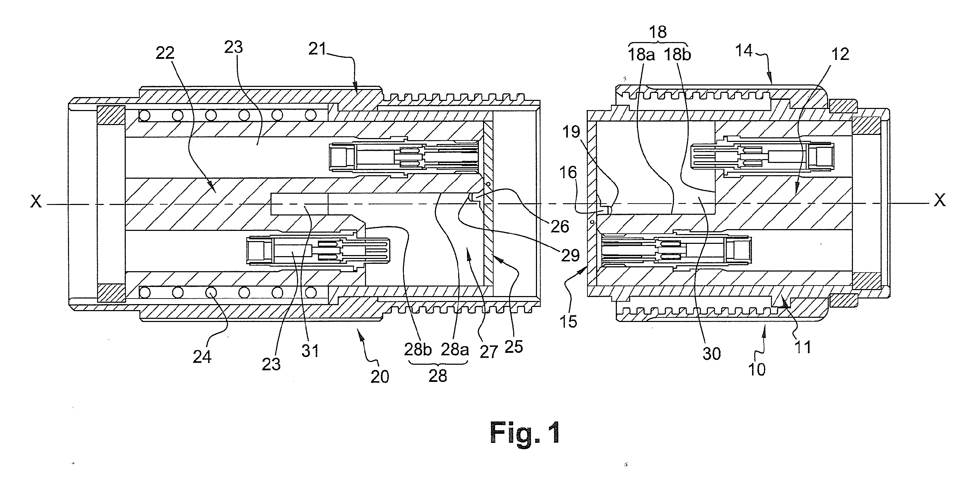

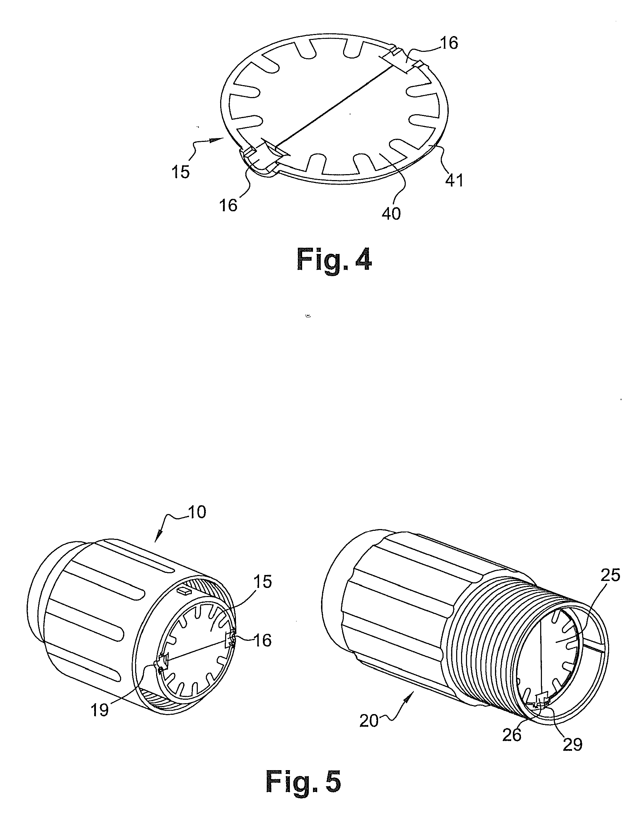

L'invention concerne un ensemble connecteur étanche, dont un exemple est représenté de façon schématique sur les figures 1 et 5. Cet ensemble connecteur comporte deux connecteurs, à savoir une fiche 10 et une embase 20.
Comme toute fiche de connecteur, la fiche 10 comporte un corps 11, de forme cylindrique dans l'exemple de la figure 1. Ce corps 11 est équipé, en son sein, d'un insert 12 traversé longitudinalement par des contacts 13. De même, l'embase 20 comporte un corps 21, également de forme cylindrique dans l'exemple de la figure 1. Ce corps 21 est muni, en son sein, d'un insert 22 traversé longitudinalement par des contacts 23. Le corps de la fiche a un diamètre inférieur à celui de l'embase afin de pouvoir être insérée dans l'embase lors de l'accouplement, ou raccord, des deux connecteurs. Après raccord de la fiche et de l'embase, une bague de verrouillage 14, fixée sur le corps 11 de la fiche, assure le maintien en position raccordée des deux connecteurs.

Selon l'invention, la forme de l'insert 12 de la fiche a une section 18 sensiblement en L. La face avant de l'insert 12 est ainsi divisée en deux parties décalées longitudinalement, formant une marche 18a et une contremarche 18b. De même, la forme de l'insert 22 de l'embase a une section 28 sensiblement en L inversé, complémentaire de la forme de l'insert 12 et adapté pour s'emboiter dans la forme en L de l'insert 12 de la fiche. La face avant de l'insert 22 est ainsi divisée en deux parties décalées longitudinalement, formant une marche 28a et une contremarche 28b. Une entretoise 27 assure une liaison mécanique entre l'insert 22 et le corps 21 de l'embase.

Selon l'invention, la fiche 10 est fermée, sur sa face avant, par un premier clapet 15, positionné selon un axe perpendiculaire à l'axe central X de la fiche. De même, la face avant de l'embase 20 est fermée par un second clapet 25, positionné selon un axe perpendiculaire à l'axe central X de l'embase. On appelle face avant de la fiche, la face radiale de ladite fiche située en regard de l'embase. De même, on appelle face avant de l'embase, la face radiale de ladite embase située en regard de la fiche.

Le clapet 15 est monté sur le corps 11 de la fiche. Le clapet 25 est monté sur une entretoise 27 de l'embase. Les clapets 15 et 25 sont aptes à pivoter autour d'un axe géométrique commun, appelé axe de pivotement. Pour cela, chacun des clapets 15 et 25 comporte, sur sa périphérie, deux saillies diamétralement opposées 16 et 26. Pour permettre la rotation des clapets 15 et 25, les saillies 16 coulissent dans les saignées réalisées dans le corps 11, formant ainsi une liaison pivot. Parallèlement, les saillies 26 coulissent dans les saignées réalisées dans l'entretoise 27, formant une deuxième liaison pivot.

Lorsque les clapets sont mis en contact en début d'accouplement, les axes des deux liaisons pivot décrits précédemment sont confondus.

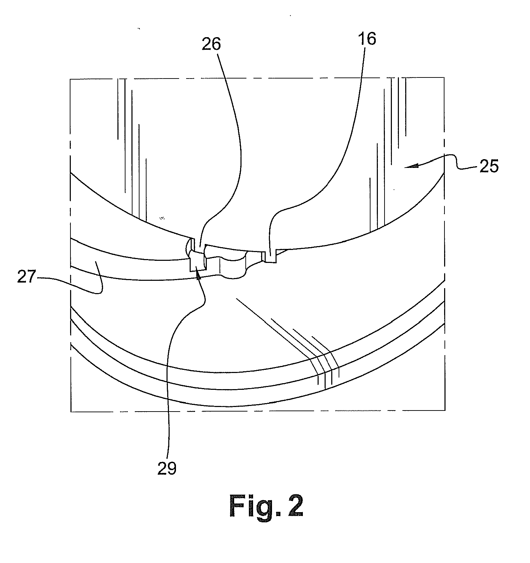

Un exemple de saillie 26 du clapet de l'embase et de la saignée 29 est représenté sur la figure 2. De façon plus précise, cette figure 2 montre le clapet 25 de l'embase avec une de ses saillies 26. Cette saillie 26 coulisse dans la saignée 29 réalisée dans l'entretoise 27. La figure 2 ne montre que l'embase et son clapet légèrement ouvert, le clapet 15 de la fiche étant monté symétriquement au clapet 25 de l'embase. Symétriquement à la saillie 26 de l'embase, la saillie16 de la fiche coulisse dans une saignée 19 réalisée dans le corps 11 de la fiche. Cette saignée constitue une demi-cavité destinée à recevoir et guider les saillies 16 et 26 en rotation. La saignée 19 et la saillie 16 de la fiche n'ont pas été représentées de façon détaillée car elles sont similaires à elles de l'embase excepté qu'elles sont réalisées sur le corps 11 de la fiche et non sur l'entretoise. Les deux saignées formant chacune une demi-cavité sont destinées, au moment du raccordement des deux connecteurs, à être accolées pour former une unique cavité servant de guide à un axe de pivotement formé par les saillies 16 et 26. Cette cavité peut avoir une forme de couronne lorsque les deux connecteurs sont accolés.

Ainsi, lors de l'accouplement de la fiche 10 et de l'embase 20, les deux clapets 15 et 25 entrent en contact l'un avec l'autre jusqu'à être plaqués l'un contre l'autre, puis ils pivotent ensemble autour de l'axe de pivotement 16/26. Ce pivotement se fait selon une rotation d'environ 90° par rapport à la position initiale radiale des clapets, c'est-à-dire par rapport à l'axe perpendiculaire à l'axe central X des connecteurs. Lorsque les deux clapets sont accolés, l'ensemble des deux connecteurs se comporte comme s'il n'y avait qu'un seul clapet pivotant autour d'un seul axe. En effet, lors de l'accouplement, quand les clapets sont en contact, les pivots (saillie et saignée) des clapets de la fiche et de l'embase ont des axes géométriques de rotation confondus, ce qui fait qu'un clapet tourne dans la saignée circulaire de son connecteur et passe en partie dans la saignée du connecteur d'en face.

Chacun des connecteurs de l'ensemble comporte un logement adapté pour recevoir au moins partiellement les clapets 15, 25. Ces logements sont réalisés par évidement d'une partie de la face avant de chaque insert. La figure 1 montre un logement 30 réalisé dans l'insert 12, entre les contacts 13, dans la direction desdits contacts. Elle montre également un logement 31 réalisé dans l'insert 22, entre les contacts 23, dans la direction desdits contacts. Les dimensions de ces logements 30 et 31 sont adaptées à celles des clapets afin que ces derniers puissent être contenus complètement dans ces deux logements.

Dans l'exemple de la figure 1, le logement 31 de l'embase, est plus long que le logement 30 de la fiche car, dans l'embase, les clapets s'enfoncent dans l'insert (rotation + translation) à cause de la translation de l'entretoise tandis que, du côté de la fiche, les clapets ne font que tourner (pas de translation) par rapport à l'insert. En outre, le corps d'embase peut comporter un ressort de rappel assurant le retour en position initiale de l'entretoise, ce ressort étant situé derrière l'entretoise.

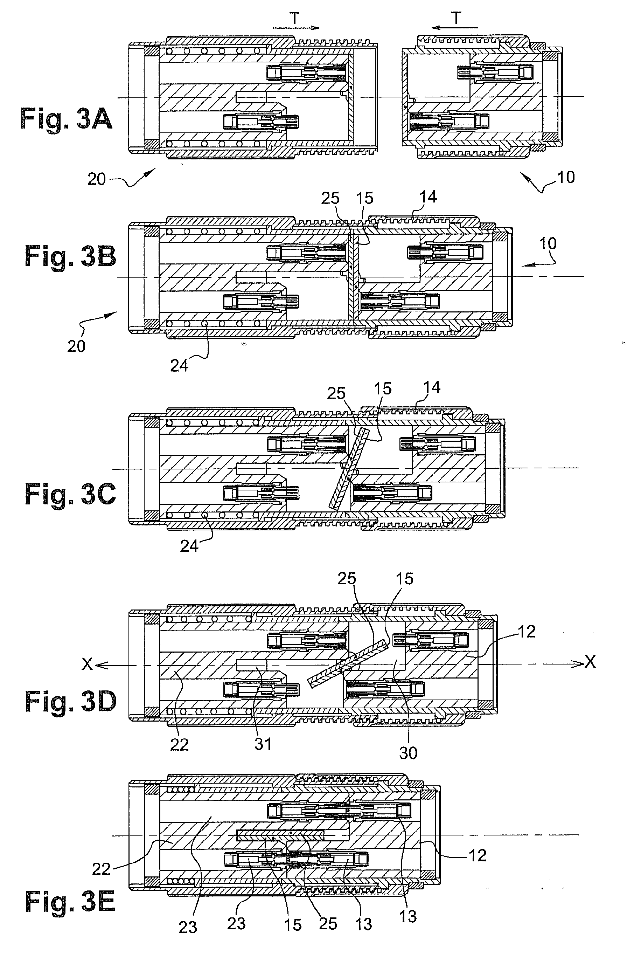

Sur les figures 3A à 3E, on a représenté schématiquement les différentes positions des deux connecteurs pendant la phase d'accouplement de l'ensemble. La figure 3A montre la fiche 10 et l'embase 20 séparément, comme sur la figure 1. La figure 3B montre la fiche 10 et l'embase 20 lorsqu'elles entrent en contact, c'est-à-dire lorsque les clapets 15 et 25 se plaquent l'un contre l'autre. Sur la figure 3C, les deux clapets 15 et 25 commencent à pivoter sous l'effet des efforts de traction T permettant d'insérer la fiche 10 dans l'embase 20. Sur cette figure, on voit que les clapets accolés s'écartent simultanément de leur position radiale. La mise en rotation des clapets est assurée par la force de contact que l'insert exerce sur le clapet lorsque l'entretoise de l'embase et le corps de la fiche portant l'axe des clapets, ou axe X, s'enfoncent en comprimant le ressort 24. La force nécessaire à l'enfoncement de l'entretoise est fournie par le vissage de la bague de verrouillage 14.

Compte tenu que, dans sa position radiale, chaque clapet 15, 25 est en contact avec la jambe du L de l'insert 12, 22, le pivotement des clapets accolés ne peut se produire que dans un seul sens, à savoir le sens des aiguilles d'une montre. Il est à noter, toutefois, que ce sens peut être inversé si la forme en L ou en L inversé des inserts 12 et 22 est inversée.

La figure 3D montre la fiche 10 et l'embase 20 lorsque ladite fiche continue à s'insérer dans ladite embase. A ce niveau de l'accouplement, la rotation des clapets accolés atteint presque les 90° par rapport à l'axe perpendiculaire à l'axe X. On voit, sur cette figure, que les clapets accolés vont se loger dans des logements adaptés, réalisés dans les inserts 12 et 22.

La figure 3E montre la fiche 10 et l'embase 20 complètement accouplées. Sur cette figure, les clapets accolés ont totalement pivoté pour se trouver dans une position longitudinale, c'est-à-dire dans l'axe central X de l'ensemble connecteur. Les clapets sont alors logés entre les deux inserts 12 et 22, entre les contacts 13, 23, dans la direction desdits contacts. Dans cette position, les contacts 13 sont raccordés aux contacts 23.

Comme on le voit sur la figure 3E, lorsque l'ensemble connecteur est raccordé, aucun élément des moyens d'étanchéité de l'invention n'est extérieur aux connecteurs. Tous les éléments permettant l'étanchéité de l'ensemble connecteur sont situés en intérieur de l'ensemble, ce qui limite les risques d'endommagement ou de trainée.

On comprend de ce qui précède que chaque clapet offre une étanchéité à un connecteur de l'ensemble quel que soit la position dudit connecteur. En position désaccouplée, le connecteur est protégé par le clapet en position radiale. Lors de la procédure d'accouplement, le connecteur est protégé par le clapet tant que ledit connecteur n'est pas au moins partiellement emboité dans l'autre connecteur, le clapet ne pivotant qu'après insertion partielle de la fiche dans l'embase. L'étanchéité des connecteurs est donc assurée pendant toute la procédure de raccordement.

Lorsque l'ensemble connecteur est désaccouplé, il est nécessaire que chacun des clapets revienne en position initiale, c'est-à-dire dans sa position radiale. Ce retour en position des clapets est assuré par des ressorts de rappel. Ces ressorts de rappel peuvent être des ressorts de traction ou bien des ressorts de torsion. Ces ressorts sont fixés de préférence sur la pièce comportant l'axe de pivotement. Ils peuvent être fixés, par exemple, sur l'insert 12 ou le corps 11 de la fiche et sur l'entretoise de l'embase. Si les ressorts de rappel de l'embase sont fixés sur l'entretoise, ils auront l'avantage de n'avoir à se déformer qu'en proportion de la course liée à la rotation du clapet, et non à celle liée à la translation de l'entretoise dans le corps de l'embase.

Lorsque les connecteurs sont désaccouplés, il est nécessaire que chacun des clapets reste en position radiale et que sa saillie ne sorte pas de la saignée. Pour cela, les saillies et/ou les saignées sont munies de moyens de blocage. Ces moyens de blocage peuvent être une butée, par exemple, située sur l'entretoise, constituée par l'insert, etc. De cette façon, chaque clapet ne peut pivoter que dans un seul sens, par exemple le sens des aiguilles d'une montre dans le cas des figures 3. Dans un autre exemple, ces moyens de blocage peuvent être constitués par une section des saillies en forme de C, à l'extrémité desdites saillies, et d'une saignée de forme complémentaire. De tels moyens de blocage permettent aux saillies formant l'axe de pivotement de coulisser dans la cavité sans pourvoir s'extraire de ladite cavité. Il est à noter que les saillies et cavités qui permettent la rotation des clapets peuvent être inversées, c'est-à-dire que les saillies en forme de C peuvent être sur le corps de fiche ou sur l'entretoise de l'embase et que les cavités peuvent être sur les clapets.

Quel que soit le mode de réalisation des connecteurs de l'invention, chaque clapet doit être rigide et réalisé de façon à être étanche, afin de protéger l'intérieur du connecteur des poussières et de l'humidité. Pour cela, le clapet peut comporter un joint d'étanchéité en caoutchouc, sur sa périphérie. La figure 4 représente un exemple de clapet selon l'invention. Ce clapet est un clapet 15 de fiche, étant entendu que le clapet 25 d'embase est identique. Ce clapet 15 comporte un corps de clapet 40, par exemple métallique, muni de saillies 16, et un joint d'étanchéité 41 entourant le corps de clapet 40. Le clapet peut aussi être fabriqué dans un élastomère surmoulé sur une pièce métallique donnant audit clapet sa rigidité et formant sa saillie, la couche d'élastomère constituant un joint d'étanchéité.

Dans un mode de réalisation de l'invention, l'étanchéité du connecteur est obtenue au moyen d'un joint d'étanchéité torique placé entre l'entretoise et le corps de l'embase. Ce joint torique permet d'assurer une étanchéité de l'embase seule lorsque l'embase et la fiche sont désaccouplés et du connecteur complet lorsqu'ils sont accouplés. Ce joint torique peut être monté en plus du joint d'étanchéité 41 entourant le corps du clapet.

La description qui précède décrit un ensemble connecteur de section circulaire. Il est à noter que l'invention peut être adaptée à toute forme de connecteur, par exemple des connecteurs à section carrée ou rectangulaire.

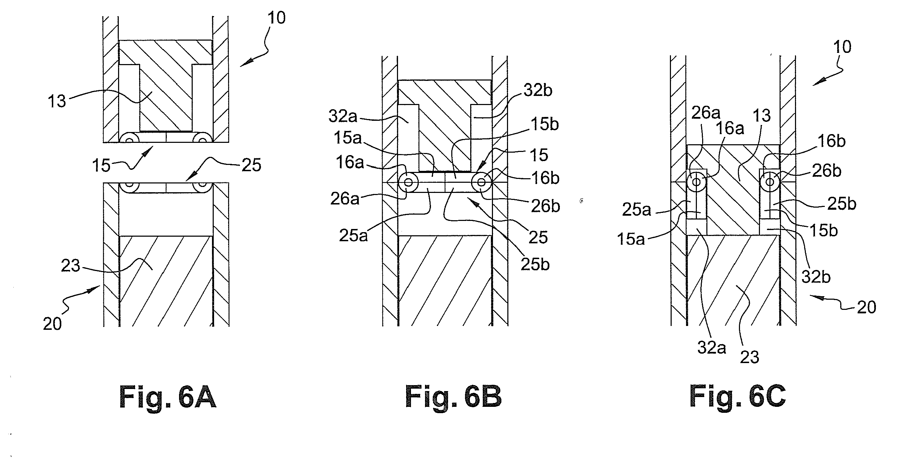

Dans le cas d'un connecteur de forme globalement carrée ou rectangulaire, les clapets peuvent être des clapets à battants. Les figures 6A, 6B et 6C représentent une vue en coupe schématique d'un tel mode de réalisation des clapets. Dans ce mode de réalisation, le clapet 15 de la fiche et le clapet 25 de l'embase comportent chacun deux battants, respectivement 15a, 15b et 25a, 25b. Chaque battant correspond, en dimensions, à un demi-clapet. Ces battants sont aptes à pivoter, par paire, autour de deux axes de pivotement positionnés latéralement de part et d'autre desdits battants. Plus précisément, un battant 25a du clapet 25 de l'embase et un battant 15a du clapet 15 de la fiche sont aptes à pivoter ensemble autour d'un axe de pivotement 16a/26a situé sur le coté externe (proche des corps d'embase et de fiche) desdits battants. Symétriquement, un battant 25b du clapet 25 de l'embase et un battant 15b du clapet 15 de la fiche sont aptes à pivoter ensemble autour d'un axe de pivotement 16b/26b situé sur le coté externe desdits battants.

Dans ce mode de réalisation, les axes de pivotement sont constitués de saillies 16 et 26 comme décrits précédemment. De même, les clapets sont identiques aux clapets des modes de réalisation décrits précédemment excepté qu'ils sont chacun constitués de deux battants ; leur rôle est identique également.

Comme le montre la figure 6C, les battants des clapets 15 et 25 sont logés, après accouplement, dans deux logements distincts 32a et 32b, formés de part et d'autre de l'insert 13 de la fiche. Comme on le comprend des figures 6A à 6C, ces logements 32a et 32b ont des dimensions adaptées aux dimensions des battants de clapets.

## Revendications

1. - Ensemble connecteur comportant :
- une fiche (10) comprenant un corps (11), un insert (12) et des contacts (13) logés longitudinalement dans l'insert,
- une embase (20) comprenant un corps (21), une entretoise (27), un insert (22) et des contacts (23) logés longitudinalement dans l'insert,
- le corps (11) de la fiche étant apte à être inséré dans le corps (21) de l'embase lors d'un accouplement assurant une connexion des contacts (13) de la fiche avec les contacts (23) de l'embase, dans lequel:
- la fiche comporte une face avant fermée par un premier clapet (15) positionné radialement sur la fiche,
- l'embase comporte une face avant fermée par un second clapet (25) positionné radialement sur l'embase,
**caractérisé en ce que** :
- le premier et le second clapets (15, 25) sont aptes à pivoter simultanément autour d'un même axe de pivotement (16, 26) et à se loger à l'intérieur de la fiche et de l'embase lors de l'accouplement de ladite fiche et de ladite embase.

2. - Ensemble connecteur selon la revendication 1, **caractérisé en ce que** le premier clapet (15) comporte une première saillie (16) et le second clapet (25) comporte une seconde saillie (26) formant, avec la première saillie, l'axe de pivotement.

3. - Ensemble connecteur selon la revendication 2, **caractérisé en ce que** le corps de la fiche comporte une première saignée (19) et l'entretoise de l'embase comporte une seconde saignée (29), la première et la seconde saignées formant une cavité apte à recevoir et à guider les saillies (16, 26).

4. - Ensemble connecteur selon les revendications 2 et 3, **caractérisé en ce que** chaque saillie (16, 26) a une extrémité en forme de C et chaque saignée (19, 29) a une section adaptée à la forme des extrémités desdites saillies.

5. - Ensemble connecteur selon l'une quelconque des revendications 1 à 4, **caractérisé en ce que** l'insert (12) de la fiche a une face avant ayant une forme sensiblement en L, l'insert (22) de l'embase a une face avant ayant une forme sensiblement en L inversé, l'insert de la fiche et l'insert de l'embase ayant des formes complémentaires l'un de l'autre.

6. - Ensemble connecteur selon la revendication 5, **caractérisé en ce que** l'insert (12) de la fiche et l'insert (22) de l'embase comportent chacun un logement (30, 31) apte à recevoir au moins partiellement le premier et le second clapets (15, 25) après que ceux-ci aient pivoté.

7. - Ensemble connecteur selon la revendication 6, **caractérisé en ce que** le logement (30, 31) est réalisé par évidement d'une partie de la face avant de l'insert.

8. - Ensemble connecteur selon l'une quelconque des revendications 1 à 7, **caractérisé en ce que** la fiche (10) et l'embase (20) comportent chacune au moins un moyen de rappel assurant le retour du clapet en position radiale lorsque la fiche et l'embase sont désaccouplées.

9. - Ensemble connecteur selon l'une quelconque des revendications 1 à 8, **caractérisé en ce que** chaque clapet comporte, sur sa périphérie, un joint d'étanchéité assurant, d'une part, l'étanchéité avec la fiche ou l'embase et, d'autre part, l'isolement d'une pollution située sur la surface extérieure des clapets lors du basculement desdits clapets à l'intérieur du connecteur.

10. - Ensemble connecteur selon l'une quelconque des revendications 1 à 9, **caractérisé en ce qu'**il comporte un joint d'étanchéité torique placé entre l'entretoise et le corps de l'embase afin d'assurer une étanchéité de l'embase seule puis du connecteur complet après accouplement.

11. - Ensemble connecteur selon la revendication 1, **caractérisé en ce que** la fiche et l'embase ont une forme globalement rectangulaire et **en ce que** le premier et le second clapets, respectivement de la fiche et de l'embase, comportent chacun deux battants (15a, 15b, 25a, 25b) aptes à pivoter par paire autour de deux axes de pivotement (16a/26a, 16b/26b) positionnés latéralement de part et d'autre desdits battants.

## Patentansprüche

1. - Verbindungseinheit, die umfasst:
- einen Stecker (10) mit einem Gehäuse (11), einem Einsatz (12) und längs in diesem Einsatz gelagerte Kontakte (13),
- einen Sockel (20) mit einem Gehäuse (21), ein Distanzstück (27), einen Einsatz (22) und längs in diesem Einsatz gelagerte Kontakte (23),
- wobei sich das Gehäuse (11) des Steckers beim Verbinden in das Gehäuse (21) des Sockels stecken lässt, um eine Verbindung zwischen den Kontakten (13) des Steckers und den Kontakten (23) des Sockels herzustellen, bei der:
- der Stecker eine durch eine erste Klappe (15) geschlossene Vorderseite aufweist, wobei die Klappe radial am Stecker positioniert ist,
- der Sockel eine durch eine zweite Klappe (25) geschlossene Vorderseite aufweist, wobei die Klappe radial am Sockel positioniert ist,
**dadurch gekennzeichnet, dass**:
- die erste und zweite Klappe (15, 25) gleichzeitig um dieselbe Kippachse (16, 26) geschwenkt werden können und beim Verbinden von Stecker und Sockel innerhalb des Steckers und des Sockels gelagert sind.

2. - Verbindungseinheit nach Anspruch 1, **dadurch gekennzeichnet, dass** die erste Klappe (15) eine erste Nase (16) und die zweite Klappe (25) eine zweite Nase (26) umfasst, die mit der ersten Nase die Kippachse bildet.

3. - Verbindungseinheit nach Anspruch 2, **dadurch gekennzeichnet, dass** das Steckergehäuse eine erste Fuge (19) und das Distanzstück des Sockels eine zweite Fuge (29) umfassen, wobei die erste und zweite Fuge eine Kavität bilden, die die Nasen (16, 26) aufnehmen und führen kann.

4. - Verbindungseinheit nach den Ansprüchen 2 und 3, **dadurch gekennzeichnet, dass** jede Nase (16, 26) ein C-förmiges Ende und jede Fuge (19, 29) einen der Form dieser Nasenenden angepassten Querschnitt hat.

5. - Verbindungseinheit nach einem der Ansprüche 1 bis 4, **dadurch gekennzeichnet, dass** der Einsatz (12) des Steckers eine Vorderseite mit einer annähernden L-Form hat, der Einsatz (22) des Sockels eine Vorderseite mit einer annähernd umgekehrten L-Form hat und der Einsatz von Stecker sowie der Einsatz des Sockels zueinander komplementäre Formen haben.

6. - Verbindungseinheit nach Anspruch 5, **dadurch gekennzeichnet, dass** der Einsatz (12) des Steckers und der Einsatz (22) des Sockels jeweils eine Aufnahme (30, 31) aufweisen, die die erste und zweite Klappe (15,25), nachdem sie geschwenkt wurden, zumindest teilweise aufnehmen können.

7. - Verbindungseinheit nach Anspruch 6, **dadurch gekennzeichnet, dass** die Aufnahme (30, 31) durch eine Aussparung eines Teils der Vorderseite des Einsatzes gebildet ist.

8. - Verbindungseinheit nach einem der Ansprüche 1 bis 7, **dadurch gekennzeichnet, dass** der Stecker (10) und der Sockel (20) jeweils mindestens ein Rückholmittel umfassen, das die Klappe in eine radiale Position zurückholt, wenn der Stecker und der Sockel nicht miteinander verbunden sind.

9. - Verbindungseinheit nach einem der Ansprüche 1 bis 8, **dadurch gekennzeichnet, dass** jede Klappe an ihrem Rand ein Dichtungselement aufweist, das einerseits die Abdichtung zum Stecker oder zum Sockel gewährleistet und andererseits die Isolierung von einer Verunreinigung auf der Außenseite der Klappen, wenn diese in den Innenraum des Steckverbinders kippen.

10. - Verbindungseinheit nach einem der Ansprüche 1 bis 9, **dadurch gekennzeichnet, dass** sie zwischen dem Distanzstück und dem Gehäuse des Sockels einen O-Ring umfasst, um die Abdichtung des Sockels alleine zu gewährleisten sowie die des kompletten Steckverbinders, nachdem die Verbindung hergestellt ist.

11. - Verbindungseinheit nach Anspruch 1, **dadurch gekennzeichnet, dass** der Stecker und der Sockel eine im Großen und Ganzen rechteckige Form aufweisen und die erste und zweite Klappe von Stecker und Sockel jeweils zwei Flügel (15a, 15b, 25a, 25b) aufweisen, die paarweise um zwei Kippachsen (16a/26a, 16b/26b) geschwenkt werden können, die seitlich beidseits dieser Flügel positioniert sind.

## Claims

1. - A connector assembly comprising:
- a plug (10) comprising a body (11), an insert (12) and contacts (13) housed longitudinally in the insert,
- a socket (20) comprising a body (21), a spacer (27), an insert (22) and contacts (23) housed longitudinally in the insert,
- the body (11) of the plug is adapted to be inserted in the body (21) of the socket during coupling to allow the contacts (13) of the plug to be connected with the contacts (23) of the socket, wherein:
- the plug comprises a front face closed by a first shutter (15) positioned radially on the plug,
- the socket comprises a front face closed by a second shutter (25) positioned radially on the socket,
**characterized in that**:
- the first and second shutters (15, 25) are adapted to turn simultaneously around the same swiveling axis (16, 26) and be housed inside the plug and the socket when said plug and said socket are coupled.

2. - A connector assembly according to claim 1, **characterized in that** the first shutter (15) comprises a first protrusion (16) and the second shutter (25) comprises a second protrusion (26) that forms the swiveling axis along with the first protrusion.

3. - A connector assembly according to claim 2, **characterized in that** the body of the plug comprises a first recess (19) and the spacer of the socket comprises a second recess (29), wherein the first and second recesses form a cavity adapted to receive and guide the protrusions (16, 26).

4. - A connector assembly according to claims 2 and 3, **characterized in that** each protrusion (16, 26) has a C-shaped end and each recess (19, 29) has a section adapted to the shape of the ends of said protrusions.

5. - A connector assembly according to any of claims 1 to 4, **characterized in that** the insert (12) of the plug has a front face shaped substantially like an L, the insert (22) of the socket has a front face shaped substantially like a reversed L, wherein the insert of the plug and the insert of the socket have shapes that are complementary with each other.

6. - A connector assembly according to claim 5, **characterized in that** the insert (12) of the plug and the insert (22) of the socket each comprise a recess (30, 31) adapted to receive at least part of the first and second shutters (15, 25) after they have turned.

7. - A connector assembly according to claim 6, **characterized in that** the recess (30, 31) is made by hollowing part of the front face of the insert.

8. - A connector assembly according to any of claims 1 to 7, **characterized in that** the plug (10) and the socket (20) each comprise at least one return means that brings the shutter back into the radial position when the plug and socket are uncoupled.

9. - A connector assembly according to any of claims 1 to 8, **characterized in that** each shutter comprises, on its perimeter, a seal that firstly ensures sealing with the plug or the socket and secondly isolates pollution located on the outer surface of the shutters when said shutters tilt inside the connector.

10. - A connector assembly according to any of claims 1 to 9, **characterized in that** it comprises an O-ring seal placed between the spacer and the body of the socket in order to seal the socket alone, then the complete connector after coupling.

11. - A connector assembly according to claim 1, **characterized in that** the plug and socket are generally rectangular in shape and **in that** the first and second shutters of the plug and socket respectively each comprise two leaves (15a, 15b, 25a, 25b) adapted to turn in pairs around two swiveling axes (16a/26a, 16b/26b) positioned laterally on each side of said leaves.
